# EUROPEAN PATENT APPLICATION

(11) **EP 4 596 350 A1**
(43) Date of publication of application: **06.08.2025**
(21) Application number: 23870501.6
(22) Date of filing: 19.09.2023
(51) Int. Cl.: B60W 30/18, B60W 50/14, B60W 10/08

(54) **VEHICLE SKID PROTECTION METHOD AND DEVICE, AND VEHICLE**

(30) Priority: 29.09.2022 CN 202211197383
(71) Applicant: Chongqing Changan Automobile Co., Ltd., Chongqing 400023 (CN)
(72) Inventor: ZHANG, Yang, Chongqing 400023 (CN); PENG, Qianlei, Chongqing 400023 (CN); DU, Changhong, Chongqing 400023 (CN); ZHENG, Yuan, Chongqing 400023 (CN); DENG, Chenghao, Chongqing 400023 (CN)
(74) Representative: Schulz Junghans Patentanwälte PartGmbB
(86) International application number: PCT/CN2023/119848
(87) International publication number: WO 2024/067269

(57) **Abstract**

The present invention belongs to the technical field of vehicles, and particularly relates to a vehicle skid protection method and device, and a vehicle. The vehicle skid protection method in the present invention comprises the following steps: checking a PV value of a differential, and, on the basis of the PV value, carrying out a conversion test to obtain a differential capability limit value curve based on a TN value; acquiring a left and right-wheel real-time rotating speed difference and real-time output torque of a speed reducer; on the basis of the real-time rotating speed difference and real-time output torque and according to the differential capability limit value curve, determining the use working condition of the differential, and judging whether there is a need to control the output torque upper limit and to enter a protection mode; and, when there is a need to control the output torque upper limit and to enter the protection mode, determining, according to a vehicle state, whether to give a man-machine prompt. The vehicle skid protection method and device, and the vehicle in the present invention can ensure the use safety of vehicle hardware, and avoid the problem that users are not clear about the capability limits of vehicles and thus cause accidents due to incorrect use, thus ensuring the safety of the vehicles and the users.

## Description

### Field of the Invention

The present disclosure belongs to the technical field of vehicles, and particularly relates to a vehicle skid protection method and device, and a vehicle.

### Background of the Invention

As the market for new energy vehicles continues to be prosperous, new energy vehicles are increasingly required, and new energy vehicles are also increasingly developing towards high performance. The assembly of a large number of power batteries leads to a higher dead weight of a vehicle body. Therefore, when vehicles are driving on slippery roads, low-attached roads are more likely to cause tire skids and speed reduction, and drivers tend to accelerate. Although most of the existing new energy vehicles are equipped with vehicle stability control programs such as a traction control system (TCS), the architecture of these systems often results in the time from the vehicle beginning to skid to actual control of the tire skid by the TCS being often greater than 100 ms, failing to promptly control the rotating speed difference and output torque. Currently, in a commonly used passenger vehicle differential, a planetary gear and a planetary shaft are responsible for the process torque and difference speed of the differential, and there is sliding lubrication between the planetary gear and the planetary shaft. Under high speed difference and high torque, a lubricating oil film is easily damaged. Therefore, when a skid occurs, the driver accelerates, and after a rotating speed difference increases and an output torque is not controlled, continuous slipping can easily cause damage to a differential planetary shaft in a speed reducer. In serious cases, ablation of the differential, locking of the differential, and breakage of a speed reducer housing will be caused, thus causing traffic accidents.

Although most of the current new energy vehicles are equipped with the TCS, they only require meeting standard test conditions. Users often remain unaware of hardware limits during actual use. Long-term use under extreme conditions will cause vehicle damage, resulting in different degrees of financial losses for both automobile manufacturers and users.

### Summary of the Invention

The present disclosure aims to provide a vehicle skid protection method and device, and a vehicle, which can ensure the use safety of vehicle hardware, and avoid the problem that users are not clear about the capability limits of vehicles and thus cause accidents due to incorrect use, thus ensuring the safety of the vehicles and the users.

To achieve the foregoing technical purpose, the present disclosure adopts the following technical solutions:
A vehicle skid protection method includes the following steps:
   S1: checking a PV value of a differential, and carrying out, on the basis of the PV value, a conversion test, to obtain a differential capability limit value curve based on a TN value, where P is a pressure, V is an angular velocity, T is a total torque of an output end, and N is a rotating speed difference between left and right output shafts;
   S2: acquiring a left and right-wheel real-time rotating speed difference and real-time output torque of a speed reducer;
   S3: determining, on the basis of the real-time rotating speed difference and the real-time output torque and according to the differential capability limit value curve, a use working condition of the differential, and judging whether there is a need to control an output torque upper limit and to enter a protection mode; and
   S4: determining, according to a vehicle state, whether to give a man-machine prompt when there is a need to control the output torque upper limit and to enter the protection mode.
It is further defined that the method further includes the following step:
   S5: exiting the protection mode when it is detected that a synchronization time of the left and right output shafts of the differential is greater than a limit time.

It is further defined that the real-time output torque is obtained by multiplying a motor output torque by a speed ratio of the speed reducer in step S2.

It is further defined that step S3 specifically includes: taking points according to the acquired real-time rotating speed difference and real-time output torque, and comparing the points with the differential capability limit value curve; when two consecutive points are on the right side of the differential capability limit value curve, determining that there is an overload use working condition, and immediately taking a value on the differential capability limit value curve with a real-time rotating speed difference of a point taken at a next time sequence; and determining a maximum bearing output torque under the rotating speed difference, and controlling the maximum bearing output torque as the output torque upper limit in a next communication cycle to enter the protection mode.

It is further defined that step S4 specifically includes:
S41: when a vehicle enters the protection mode, if the vehicle does not lose stability, driving normally, and if the vehicle continues to lose stability, further judging whether the vehicle triggers a TCS; and
S42: if the TCS is triggered, determining a vehicle speed within ten signal cycles, if the vehicle speed is less than or equal to 0 km/h, giving a man-machine prompt to prompt a user of a vehicle failure state, and if the vehicle speed is greater than 0 km/h, continuously using the vehicle in a current state.

In addition, the present disclosure further discloses a vehicle skid protection device for implementing the foregoing vehicle skid protection method. The vehicle skid protection device includes: an electric drive device, where rotating speed sensors are respectively mounted on left and right output shafts of the electric drive device and are configured to collect and calculate a left and right-wheel real-time rotating speed difference and real-time output torque of a vehicle;
a vehicle stability controller, configured to monitor and control a driving stability of the vehicle; and
a vehicle controller, configured to control a state of each controller of the vehicle.

The electric drive device is in signal connection with the vehicle stability controller and the vehicle controller. The vehicle stability controller is in signal connection with the vehicle controller. The vehicle controller is further in signal connection with a center console dashboard.

It is further defined that the electric driving device includes a speed reducer, and a drive motor and a motor controller respectively mounted on two sides of the speed reducer. The two rotating speed sensors are respectively mounted on two sides of an output end of a differential of the speed reducer. The two rotating speed sensors are in signal connection with the motor controller. The motor controller is in signal connection with the vehicle stability controller and the vehicle controller.

The present disclosure further discloses a vehicle, including the foregoing vehicle skid protection device.

It is further defined that the vehicle is any one of a front-wheel drive vehicle, a rear-wheel drive vehicle, or a four-wheel drive vehicle.

It is further defined that the vehicle is any one of a pure electric vehicle, a hybrid vehicle, or a fuel cell vehicle.

The present disclosure adopting the foregoing technical solutions has the following advantages:
According to the vehicle skid protection method of the present disclosure, starting with the most basic sliding lubrication condition for the first time, whether to limit an output torque of a drive motor is judged on the basis of a real-time rotating speed difference value, and an operating condition of transmission mechanical hardware is determined during the period when a motor controller enters the output torque limit and starts a protection mode, so that the abnormal damage of a vehicle under limit use can be effectively reduced, and the service life of the vehicle can be ensured.

### Brief Description of the Drawings

The present disclosure may be further illustrated by non-limiting embodiments shown in the accompanying drawings.
Fig. 1 is a schematic diagram of a structural principle of a vehicle skid protection device according to the present disclosure.
Fig. 2 is a schematic structural diagram of a differential in a vehicle skid protection device according to the present disclosure.
Fig. 3 is a schematic diagram of a differential capability limit value curve in a vehicle skid protection device according to the present disclosure.
Fig. 4 is a flowchart of a vehicle skid protection method according to the present disclosure.
Fig. 5 is a flowchart showing an operation principle of a vehicle skid protection method during vehicle driving according to the present disclosure.

Reference numerals: 1-right output shaft rotating speed sensor, 2-left output shaft rotating speed sensor, 3-drive motor, 4-speed reducer, 5-motor controller, 6-vehicle stability controller, 7-vehicle controller, and 8-center console/dashboard.

### Detailed Description of the Embodiments

The present disclosure will be described in detail below with reference to the accompanying drawings and specific embodiments. It should be noted that in the accompanying drawings or the description of the specification, similar or identical parts are denoted by the same figure number, and implementations not illustrated or described in the accompanying drawings are in forms known to those of ordinary skill in the art. In addition, the directional terms mentioned in the embodiments, such as "upper", "lower", "top", "bottom", "left", "right", "front", and "rear", are only directions with reference to the accompanying drawings, and are not intended to limit the scope of protection of the present disclosure.

### Embodiment

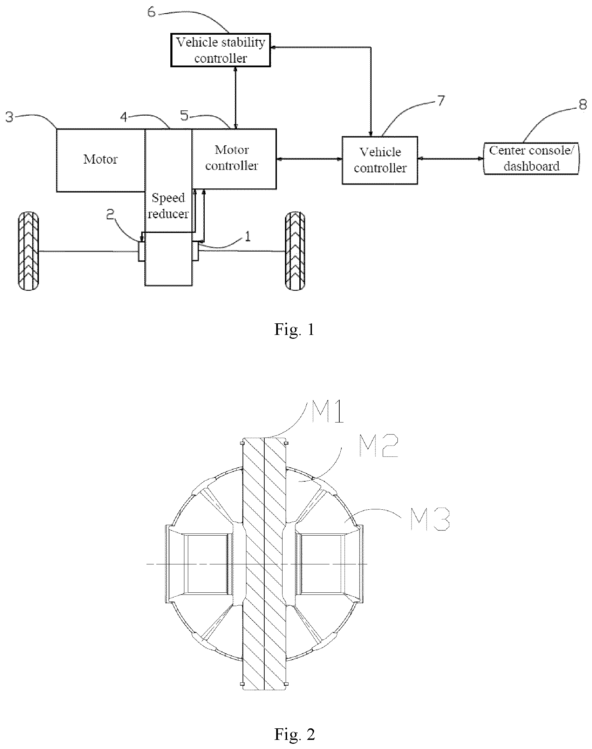

As shown in Fig. 1 and Fig. 2, a vehicle skid protection device of the present disclosure includes an electric drive device. Rotating speed sensors are respectively mounted on left and right output shafts of the electric drive device, are respectively denoted as a right output shaft rotating speed sensor 1 and a left output shaft rotating speed sensor 2, and are configured to collect and calculate a left and right-wheel real-time rotating speed difference and real-time output torque of a vehicle. Specifically, the electric drive device in this embodiment includes a speed reducer 4, and a drive motor 3 and a motor controller 5 respectively mounted on two sides of the speed reducer 4. The right output shaft rotating speed sensor 1 and the left output shaft rotating speed sensor 2 are respectively mounted on two sides of an output end of a differential of the speed reducer 4. The right output shaft rotating speed sensor 1 and the left output shaft rotating speed sensor 2 are in signal connection with the motor controller 5, so as to synchronize rotating speeds of the left and right shafts to the motor controller 5 in real time. The motor controller 5 then calculates a real-time rotating speed difference between the left and right output shafts in real time, and calculates a real-time wheel end output torque on the basis of a real-time output torque of the drive motor 3, where the real-time output torque is obtained by multiplying a motor output torque by a speed ratio of the speed reducer. The electric drive device is not limited to a three-in-one or all-in-one form, as long as corresponding functions can be realized. The vehicle skid protection device further includes a vehicle stability controller 6, which is configured to monitor and control the driving stability of the vehicle, is capable of collecting a real-time vehicle speed of each vehicle at a wheel end in real time, calculating a wheel slip rate in real time, ensuring the vehicle safety by controlling the wheel end torque/traction on different vehicles, and has multiple chassis control functions. The vehicle controller 7 is configured to control the state of each controller of the vehicle to meet driving needs of users, and serves as an arbitration center to ensure the safety of the vehicles and the users. The electric drive device is in signal connection with the vehicle stability controller 6 and the vehicle controller 7. Specifically, the motor controller 5 is in signal connection with the vehicle stability controller 6 and the vehicle controller 7. The vehicle stability controller 6 is in signal connection with the vehicle controller 7. The vehicle controller 7 is in signal connection with a center console dashboard 8. The center console dashboard 8 serves as a medium for directly interacting with the user, and the user may know whether the vehicle is running normally by displaying information.

A working instruction of the motor controller 5 of the present disclosure is transferred by the vehicle controller 7 through signals on the basis of user requirements, and the motor controller 5 is responsible for execution. Similarly, the vehicle stability controller 6 and the center console dashboard also need to perform signal interaction on the basis of vehicle control in real time. Specifically, a vehicle system provided by the present disclosure may also realize direct signal interaction between the vehicle stability controller 6 and the motor controller 5. **In** an emergency, the vehicle stability controller 6 may directly perform demand control on the motor controller 5. **In** the present disclosure, the vehicle stability controller 6 may interact with the motor controller 5 through the vehicle controller 7 in addition to separate information interaction with the motor controller 5. In order to ensure the real-time interaction with the user, the vehicle controller 7 in the present disclosure can also interact with the center console dashboard in real time.

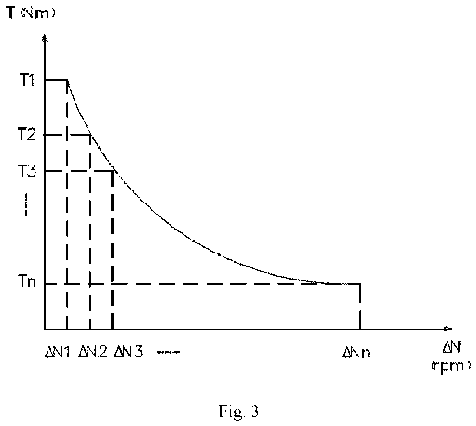

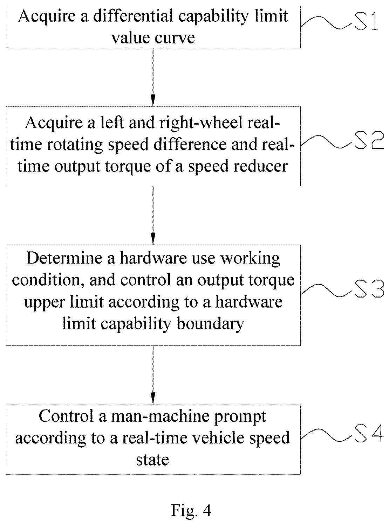

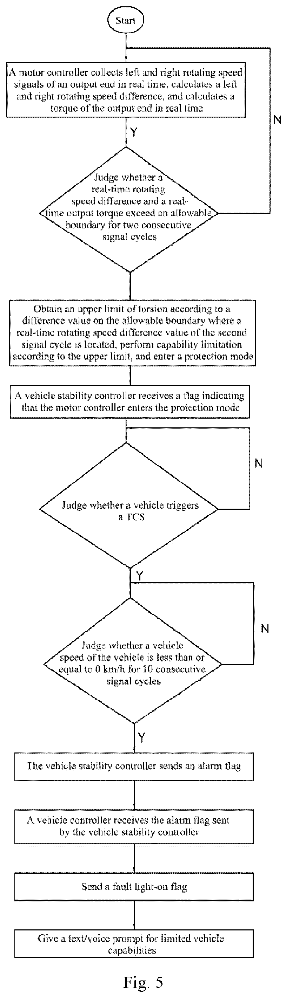

As shown in Fig. 3 to Fig. 5, another embodiment of the present disclosure discloses a method of vehicle skid protection using the foregoing vehicle skid protection device, specifically including the following steps.

At S1, before a differential is integrated, a PV value of the differential is checked, and on the basis of the PV value, a conversion test is carried out, to obtain a differential capability limit value curve based on a TN value, where P is a pressure, V is an angular velocity, T is a total torque of an output end, and N is a rotating speed difference between left and right output shafts.

At S2, a left and right-wheel real-time rotating speed difference and real-time output torque of the speed reducer 4 are acquired.

Specifically, the right output shaft rotating speed sensor 1 and the left output shaft rotating speed sensor 2 located on two sides of the differential of the speed reducer 4 monitor a rotating speed difference in real time, and synchronize the rotating speed difference to the motor controller 5 in real time. The motor controller 5 performs real-time calculation according to that a real-time output torque is obtained by multiplying a motor output torque by a speed ratio of the speed reducer, so as to obtain the left and right-wheel real-time rotating speed difference and real-time output torque of the speed reducer 4.

At S3, on the basis of the real-time rotating speed difference and the real-time output torque and according to the differential capability limit value curve, a use working condition of the differential is determined, and whether there is a need to control an output torque upper limit and to enter a protection mode is judged.

Specifically, points are taken according to the acquired real-time rotating speed difference and real-time output torque, and the points are compared with the differential capability limit value curve. When the points are taken in a left region of the differential capability limit value curve, the points are regarded as points meeting a differential use capability. When the points are taken in a right region of the differential capability limit value curve, the points are regarded as points exceeding the differential use capability. Whether a differential capability limit value is exceeded is judged on the basis of a continuous judgment result. To be specific, when two consecutive points are on the right side of the differential capability limit value curve, it is determined that there is an overload use working condition, and a value is immediately taken on the differential capability limit value curve with a real-time rotating speed difference of a point taken at a next time sequence. On the basis of a point taking result, a real-time output torque limit value is obtained, and a maximum bearing output torque under the rotating speed difference is determined. The motor controller 5 immediately controls the maximum bearing output torque as the output torque upper limit in a next communication cycle, and sends a protection state flag to the vehicle stability controller to enter the protection mode. Any torque correspondingly converted by the vehicle controller 7 during execution on the basis of a user accelerator pedal opening will be limited within this limit value.

At S4, when there is a need to control the output torque upper limit and to enter the protection mode, according to a vehicle state, whether to give a man-machine prompt is determined. This step specifically includes the following steps.

At S41, when the vehicle stability controller receives the protection flag sent by the motor controller 5, after the vehicle enters the protection mode, the real-time vehicle speed is immediately monitored. If the vehicle does not lose stability, the vehicle drives normally. If the vehicle continues to lose stability, whether the vehicle triggers a TCS is further judged.

At S42, if the TCS is triggered, a vehicle speed within ten signal cycles is determined. If the vehicle speed is less than or equal to 0 km/h, it indicates that the vehicle cannot advance at present or is reversing, proving that the vehicle cannot perform the driving function in the protection mode in this case. Especially for a skid ramp, after the maximum output torque of the vehicle is limited, if sufficient traction cannot be obtained, the vehicle cannot continue to climb or may even slip backward. When the vehicle cannot drive or may slip, the user will try to accelerate to get out of trouble, but this will increase the vehicle side skid and slip fault. Continued use according to this condition will bring potential safety hazards, and it is necessary to terminate this use scenario immediately to protect the user and the vehicle. Therefore, a man-machine prompt is given in this case. The vehicle stability controller 6 sends an alarm flag. After receiving the alarm flag, the vehicle controller 7 immediately sends a fault light-on flag to prompt the user of a vehicle fault state, and prompts the user of vehicle capability limit by text/voice to prompt the user of the vehicle fault state. After receiving this information, the user will consciously step off the accelerator pedal or reverse from the ramp to protect the user and the vehicle. If the vehicle speed is greater than 0 km/h, the vehicle can perform the driving function in this mode without intervention, and the vehicle may be continuously used in the current state.

At S5, the protection mode is exited when it is detected that a synchronization time of the left and right output shafts of the differential is greater than a limit time.

In another embodiment of the present disclosures, a vehicle is further provided, including the foregoing vehicle skid protection device. The vehicle may be any one of a front-wheel drive vehicle, a rear-wheel drive vehicle, or a four-wheel drive vehicle, or any one of a pure electric vehicle, a hybrid vehicle, or a fuel cell vehicle.

The vehicle skid protection method and device and the vehicle provided by the present disclosure are described in detail above. The description of specific embodiments is merely intended to aid in understanding the method of the present disclosure and the core idea thereof. It should be noted that a person of ordinary skill in the art may make numerous improvements and modifications to the present disclosure without departing from the principles of the present disclosure. Such improvements and modifications are intended to be within the scope of the appended claims of the present disclosure.

## Claims

1. A vehicle skid protection method, comprising the following steps:
S1: checking a PV value of a differential, and carrying out, on the basis of the PV value, a conversion test, to obtain a differential capability limit value curve based on a TN value, wherein P is a pressure, V is an angular velocity, T is a total torque of an output end, and N is a rotating speed difference between left and right output shafts;
S2: acquiring a left and right-wheel real-time rotating speed difference and real-time output torque of a speed reducer;
S3: determining, on the basis of the real-time rotating speed difference and the real-time output torque and according to the differential capability limit value curve, a use working condition of the differential, and judging whether there is a need to control an output torque upper limit and to enter a protection mode; and
S4: determining, according to a vehicle state, whether to give a man-machine prompt when there is a need to control the output torque upper limit and to enter the protection mode.

2. The vehicle skid protection method according to claim 1, further comprising the following step:
S5: exiting the protection mode when it is detected that a synchronization time of the left and right output shafts of the differential is greater than a limit time.

3. The vehicle skid protection method according to claim 1, wherein the real-time output torque is obtained by multiplying a motor output torque by a speed ratio of the speed reducer in step S2.

4. The vehicle skid protection method according to claim 1, wherein step S3 specifically comprises: taking points according to the acquired real-time rotating speed difference and real-time output torque, and comparing the points with the differential capability limit value curve; when two consecutive points are on the right side of the differential capability limit value curve, determining that there is an overload use working condition, and immediately taking a value on the differential capability limit value curve with a real-time rotating speed difference of a point taken at a next time sequence; and determining a maximum bearing output torque under the rotating speed difference, and controlling the maximum bearing output torque as the output torque upper limit in a next communication cycle to enter the protection mode.

5. The vehicle skid protection method according to claim 1, wherein step S4 specifically comprises:
S41: when a vehicle enters the protection mode, if the vehicle does not lose stability, driving normally, and if the vehicle continues to lose stability, further judging whether the vehicle triggers a traction control system (TCS); and
S42: if the TCS is triggered, determining a vehicle speed within ten signal cycles, if the vehicle speed is less than or equal to 0 km/h, giving a man-machine prompt to prompt a user of a vehicle failure state, and if the vehicle speed is greater than 0 km/h, continuously using the vehicle in a current state.

6. A vehicle skid protection device, comprising: an electric drive device, wherein rotating speed sensors are respectively mounted on left and right output shafts of the electric drive device and are configured to collect and calculate a left and right-wheel real-time rotating speed difference and real-time output torque of a vehicle;
a vehicle stability controller, configured to monitor and control a driving stability of the vehicle; and
a vehicle controller, configured to control a state of each controller of the vehicle, wherein
the electric drive device is in signal connection with the vehicle stability controller and the vehicle controller, the vehicle stability controller is in signal connection with the vehicle controller, and the vehicle controller is further in signal connection with a center console dashboard.

7. The vehicle skid protection device according to claim 6, wherein the electric driving device comprises a speed reducer, and a drive motor and a motor controller respectively mounted on two sides of the speed reducer; the two rotating speed sensors are respectively mounted on two sides of an output end of a differential of the speed reducer; and the two rotating speed sensors are in signal connection with the motor controller, and the motor controller is in signal connection with the vehicle stability controller and the vehicle controller.

8. A vehicle, comprising the vehicle skid protection device according to claim 7 or 8.

9. The vehicle according to claim 8, wherein the vehicle is any one of a front-wheel drive vehicle, a rear-wheel drive vehicle, or a four-wheel drive vehicle.

10. The vehicle according to claim 9, wherein the vehicle is any one of a pure electric vehicle, a hybrid vehicle, or a fuel cell vehicle.
